# EUROPÄISCHE PATENTSCHRIFT

(11) **EP 2 862 950 B1**
(45) Veröffentlichungstag und Bekanntmachung des Hinweises auf die Patenterteilung: **15.03.2017**
(21) Anmeldenummer: 14192857.2
(22) Anmeldetag: 08.10.2012
(51) Int. Cl.: C22B 7/00, C22B 21/00, B02C 23/08, B07B 9/02, B07C 5/34

(54) **Verfahren zur mechanischen Aufbereitung von Aluminiumschrott**
Method for the mechanical processing of aluminium scrap
Procédé destiné à la préparation mécanique de débris d'aluminium

(43) Veröffentlichungstag der Anmeldung: 22.04.2015
(62) Teilanmeldung aus: 12187683.3
(73) Patentinhaber: Hydro Aluminium Recycling Deutschland GmbH, 41542 Dormagen (DE)
(72) Erfinder: Kurth, Gregor, 41466 Neuss (DE); Kurth, Boris, 41564 Kaarst (DE)
(74) Vertreter: Stenger Watzke Ring

(56) Entgegenhaltungen:
- DE-U1-202009 006 383
- US-A- 4 317 521
- US-A- 4 363 722
- US-A- 4 848 590
- US-B1- 6 266 390
- US-B1- 7 674 994
- US-B2- 7 848 848

## Beschreibung

Die Erfindung betrifft ein Verfahren zur mechanischen Aufbereitung von Aluminiumschrott. Ferner betrifft die Erfindung eine Vorrichtung zur mechanischen Aufbereitung von Aluminiumschrott.

Aus Sammelbetrieben anfallender Aluminiumschrott liegt in aller Regel nicht sortenrein vor. Er ist vielmehr durchsetzt von Stör- und Fremdstoffen, weshalb eine Wiederverwendung nicht ohne vorherige Aufbereitung möglich ist.

Aus dem Stand der Technik sind verschiedene Verfahren zur mechanischen Trennung und Aufbereitung von Nichteisenmetallen im Allgemeinen sowie von Aluminiumschrott im Speziellen bekannt geworden. So offenbart beispielsweise die DE 100 02 368 C2 ein Verfahren zur Auftrennung von Nichteisenmetalle enthaltene Fraktionen in die jeweiligen Nichteisenmetalle, wobei sich dieses Verfahren dadurch auszeichnet, dass die nichteisenhaltige Fraktion mit mindestens einer Lösung von einem oder mehreren anorganischen und/oder organischen Reagenzien behandelt wird, was zu einer spezifischen Oberflächenfärbung der Nichteisenmetalle führt. Die so eingefärbten Oberflächen werden mittels eines CCD-Kamerasystems erkannt und über die farbliche Aussortierung getrennt.

Aus der DE 20 2009 006 383 U1 ist eine Vorrichtung zur Trennung von Aluminiumschrott bekannt geworden, die über eine Einrichtung zur Zerkleinerung des Aluminiumschrotts sowie über eine Einrichtung zur mechanischen Entlackung des zerkleinerten Aluminiumschrotts verfügt. Ferner verfügt diese Vorrichtung über eine Einrichtung zur röntgenfluoreszenzspektroskopischen Bestimmung des Anteils wenigstens eines chemischen Elements in dem zerkleinerten Aluminiumschrott. Mittels dieser Einrichtung kann eine Bestimmung der im Aluminiumschrott enthaltenen Aluminiumlegierungen vorgenommen werden, was dann im Weiteren eine entsprechende Sortierung gestattet. Eine ähnliche Einrichtung ist aus der US 4,317,521 bekannt geworden, die eine Vorrichtung zur Sortierung von Metallschrott offenbart, die über eine Einrichtung zur Röntgenfluoreszenzspektroskopie verfügt.

Den Vorrichtungen nach der US 4,317,521 und der DE 20 2009 006 383 U1 ist die Verwendung der Röntgenfluoreszenzspektroskopie gemein. Dabei baut die Röntgenfluoreszenzspektroskopie darauf auf, dass ein einer Röntgenstrahlung ausgesetzter Körper eine charakteristische Refiektionsstrahlung abgibt, deren Analyse einen Rückschluss auf die chemische Zusammensetzung des bestrahlten Körpers zulässt. Der Einsatz solcher Einrichtungen hat sich in der alltäglichen Praxis allerdings nicht durchgesetzt, da die Fehlerquote in nachteiliger Weise zu hoch und/oder die Geschwindigkeit der ermöglichten Verfahrensabwicklung nicht zufriedenstellend ist.

Aus dem Stand der Technik sind auch zahlreiche chemische Verfahren bekannt geworden, wonach vorgesehen ist, den Aluminiumschrott einzuschmelzen und eine Trennung in unterschiedliche Materialkomponenten anhand der schmelzflüssigen Phase vorzunehmen.

Von Vorteil der chemischen Verfahren ist die Reinheit des so gewonnen Aluminiums. Allerdings ist der Energieaufwand beträchtlich und liegt ein Vielfaches über der bei einem mechanischen Aufbereitungsverfahren benötigten Energie.

Andererseits lassen sich mit den aus dem Stand der Technik vorbekannten mechanischen Verfahren nicht die Reinheitsgrade erzielen, wie dies die vorbekannten chemischen Verfahren gestatten. Mechanisch aufbereiteter Aluminiumschrott bedarf deshalb je nach weitergehender Verwendung der Zusetzung von Reinaluminium, um so in der Gesamtmischung den geforderten Reinheitsgrad erzielen zu können. Die unter Umständen erforderliche Zugabe von Reinaluminium wird nicht zuletzt deshalb als nachteilig empfunden, weil für die Gewinnung von Reinaluminium ebenfalls beträchtliche Energiemengen benötigt werden.

Es ist ausgehend vom Vorbeschriebenen die **Aufgabe** der Erfindung, ein Verfahren zur mechanischen Aufbereitung von Aluminiumschrott anzugeben, das bei gleichzeitig vergleichsweise geringem Energieaufwand hohe Reinheitsgrade hinsichtlich des wiederzuverwendenden Aluminiums ermöglicht.

Zur **Lösung** dieser Aufgabe wird mit der Erfindung vorgeschlagen ein Verfahren zur mechanischen Aufbereitung von Aluminiumschrott, bei dem in einem ersten Schritt eine Zerkleinerung des Aluminiumschrotts durchgeführt wird, bei dem in einem zweiten Schritt der zerkleinerte Aluminiumschrott einer Siebanlage zugeführt und in eine Fraktion aus Unterkornmaterialien einerseits und eine Fraktion aus Überkornmaterialien andererseits unterteilt wird, bei dem in einem dritten Schritt die Fraktion aus Überkornmaterialien vergleichmäßigt wird, bei dem in einem vierten Schritt die vergleichmäßigte Fraktion aus Überkornmaterialien als Sortiergut in einer Röntgeneinrichtung einer Dichtebestimmung mittels Röntgentransmission unterzogen wird, bei dem in einem fünften Schritt Materialpartikel aus dem Sortiergut mit einer oberhalb eines vorgebbaren Grenzwertes liegenden Dichte pneumatisch aussortiert werden.

Das erfindungsgemäße Verfahren umfasst eine Vielzahl einzelner Verfahrensschritte, wobei ein wesentlicher Verfahrensschritt durch eine Dichtebestimmung mittels Röntgentransmission gegeben ist. Gemäß diesem Verfahrensschritt findet eine Dichtebestimmung der Partikel statt, aus dem sich der vorbehandelte Aluminiumschrott zusammensetzt. Diese Dichtebestimmung erfolgt mittels Röntgentransmission. Im Ergebnis können so Materialpartikel aussortiert werden, die eine Dichte aufweisen, die oberhalb eines frei vorgebbaren Grenzwertes liegen. Auf diese Weise ist es gestattet, Partikel einer bestimmten Zusammensetzung sicher ausfindig machen und aussortieren zu können, wobei als Aussortierkriterium die physikalische Größe der Dichte verwendet wird, die hinsichtlich möglicher Materialkomponenten und/oder -zusammensetzungen charakteristisch ist.

Dabei können mittels der Dichtebestimmung nicht nur unterschiedliche Materialkomponenten sondern auch unterschiedliche Materiallegierungen voneinander unterschieden werden. Dies gestattet sowohl die Trennung von Aluminium und anderen Metallen voneinander als auch die Aussortierung unerwünschter Aluminiumlegierungen, die den Reinheitsgrad des späteren Endproduktes nachteilig beeinflussen würden. Im Ergebnis lässt sich so ein Reinheitsgrad hinsichtlich des späteren Endproduktes erzielen, der mit aus dem Stand der Technik bislang bekannten mechanischen Aufbereitungsverfahren nicht möglich war. So lassen sich mit dem erfindungsgemäßen Prozess exakte Analysen innerhalb der Spezifikationen einhalten.

Im Unterschied zu vorbekannten Verfahren und Einrichtungen, die die Röntgenfluoreszenzspektroskopie verwenden, erfolgt bei der erfindungsgemäßen Verfahrensdurchführung eine Dichtbestimmung mittels Röntgentransmission. Im Ergebnis wird so eine schnellere und zuverlässigere Verfahrensdurchführung erreicht. Dies stand nicht zu erwarten, da die Fachwelt bislang davon ausgegangen ist, dass es zur Erzielung eines möglichst hohen Reinheitsgrades erforderlich ist, einzelne chemische Elemente exakt zu bestimmen und hierauf basierend eine Aussortierung vorzunehmen. In Abkehr zu dieser Vorstellung wird mit der Erfindung erstmals vorgeschlagen, eine Dichtebestimmung mittels Röntgentransmission vorzusehen, die vergleichsweise einfach durchzuführen ist und dies bei gleichzeitiger Zuverlässigkeit im Ergebnis.

Gemäß der Röntgentransmission ist vorgesehen, dass Röntgenstrahlen das Sortiergut durchleuchten, wobei ein für Röntgenstrahlen sensibler Sensor, zum Beispiel eine Kamera die Intensität der Strahlung ermittelt, die durch das Sortiergut, das heißt das Material hindurchtritt. Mittels eines Rechners wird der Unterschied zwischen der eintretenden Strahlung einerseits und der austretenden Strahlung andererseits ermittelt. Die sich hieraus ergebende Differenz der Strahlungsintensität entspricht der durch das durchleuchtete Material bewirkten Strahlungsabsorption. Diese lässt einen direkten Rückschluss auf die atomare Zusammensetzung des durchleuchteten Materials zu, woraus sich wiederum die Dichte bestimmen lässt. In einfacher Weise ist es so möglich, unerwünschte Fremdmetalle, wie zum Beispiel Zink, Kupfer, Blei und Edelstahl als auch unerwünschte Aluminium-Legierungen wie beispielsweise Aluminium-Zink-Legierungen und/oder Aluminium-Kupfer-Legierungen eineindeutig zu erkennen und auszusortieren.

In vorteilhafter Weise ist es so möglich, ein Endprodukt mit einem hohen Aluminium-Reinheitsgrad bereitzustellen, und dies bei gleichzeitiger Minimierung des Energieaufwandes, womit das gesamte Verfahren insgesamt sehr umweltschonend ist, nicht zuletzt auch deshalb, weil im Vergleich insbesondere zu chemischen Aufbereitungsverfahren der CO₂-Ausstoß verringert und der Einsatz von Primärenergie vermindert werden kann.

Die nach der erfindungsgemäßen Verfahrensdurchführung vorgesehene Röntgentransmission erbringt insbesondere dann zuverlässige Ergebnisse, wenn das Sortiergut eine möglichst einheitliche Partikelgröße und -verteilung aufweist. Ansonsten können sich schon aufgrund unterschiedlicher Partikelgrößen Abweichungen in der Differenz der Strahlungsintensität einstellen. Es ist deshalb verfahrensseitig vorgesehen, dass zunächst eine Zerkleinerung, eine Siebung sowie eine Vergleichmäßigung des Aluminiumschrotts durchgeführt werden, bevor eine Dichtebestimmung mittels der erfindungsgemäß vorgesehenen Röntgentransmission stattfindet.

Nach der erfindungsgemäßen Verfahrensdurchführung wird in einem ersten Verfahrensschritt eine Zerkleinerung des Aluminiumschrotts durchgeführt. Der Verfahrensschritt der Zerkleinerung kann dabei mehrstufig durchgeführt werden. Es ist indes eine zweistufige Zerkleinerung bevorzugt, wobei in der ersten Zerkfeinerungsstufe ein Shredder (im Deutschen auch Schredder genannt)/Rotormühle zum Einsatz kommt. Die den Shredder/Rotormühle verlassenen Partikel besitzen eine kubische, kugelartige Ausgestaltung und können eine Größe von bis zu 200 mm aufweisen.

In einer zweiten Zerkleinerungsstufe kommt das Aluminium-Shredder-Material in einen nachgeschalteten Nachzerkleinerer/Schneidmühle. Hier findet eine Nachzerkleinerung statt, wobei die den Nachzerkleinerer/Schneidmühle verlassenden Partikel flächenartig beziehungsweise scheibenförmig ausgebildet sind und eine Größe von beispielsweise bis zu 80 mm aufweisen.

Dem Zerkleinerungsschritt nachfolgend ist gemäß einem zweiten Verfahrensschritt vorgesehen, dass der zerkleinerte Aiuminiumschrott einer Siebanlage zugeführt wird. Hier findet eine Trennung in zwei Materialkörnungen statt, wobei sich zwei Fraktionen ergeben, nämlich eine Fraktion aus Unterkornmaterialien einerseits und eine Fraktion aus Überkornmaterialien andererseits. Je nach eingesetzten Sieben wird die Größe der Überkornmaterialien beziehungsweise der Unterkornmaterialien festgelegt. Beispielsweise hat das Überkornmaterial eine Größe von mehr als 0,3 mm, mehr bevorzugt von mehr als 3 mm, noch mehr bevorzugt von mehr als 10 mm. Körner mit einer kleineren Korngröße stellen das Unterkornmaterial dar.

Das Ziel der Materialvorbereitung durch Zerkleinern und Sieben ist es, eine definierte Aluminium-Shredder-Material-Qualität zu erzeugen. Für den anschließenden Verfahrensschritt der Röntgenseparation ist ein Körnungsspektrum von ca. 6 mm bis 80 mm bevorzugt. Bei einem solchen Körnungsspektrum ist eine Vergleichbarkeit für eine Röntgensortierung gewährleistet. Nachzerkleinerte Materialien innerhalb dieses Körnungsspektrums sind für vergleichbare Materialstärken von 1 mm bis 10 mm charakteristisch. Zu starke Wandstärken werden je nach Detektion der Materialteilchen mit ausgesondert (Übersortierung).

Das abgesiebte Unterkornmaterial findet im weiteren Verfahrensprozess keine Verwendung mehr und kann abgefüllt und vermarktet werden. Typischerweise liegt der Anteil des Unterkornmaterials unterhalb von 0,5% (je nach Auswahl der Siebe) des Gesamtfördervolumens. Durch das Abführen des Unterkornmaterials werden die Umschlag- beziehungsweise die Trennprozesse der Gesamtanlage zusätzlich entstaubt und die Reststaubanteile auf ein Minimum reduziert.

Das der Siebanlage entstammende Überkornmaterial wird gemäß der weiteren Verfahrensabwicklung weiter behandelt, wobei in einem dritten Verfahrensschritt zunächst eine Vergleichmäßigung erfolgt. Zum Zwecke der Vergleichmäßigung kann beispielsweise eine vibrierende Förderrinne zum Einsatz kommen, die das Überkornmaterial von der Siebanlage zu der nachgeschalteten Röntgeneinrichtung transportiert. Sinn und Zweck der Vergleichmäßigung ist es dabei, ein möglichst homogenes Sortiergutgemisch auszubilden, so dass im weiteren Verfahrensgang eine möglichst zuverlässige Dichtebestimmung mittels Röntgentransmission durchgeführt werden kann.

Die Röntgeneinrichtung verfügt über ein Röntgensortiersystem. Dieses gestattet es, in Abhängigkeit der unterschiedlichen Materialdichten, das heißt der Atomanzahl zu sortieren. Mittels der Röntgensortieranlage werden im Wesentlichen Schwermetalle sowie unerwünschte Aluminium-Legierungen aussortiert. Dabei wird in der schon vorbeschriebenen Weise die Differenz der Strahlungsintensität zwischen eintretender und austretender Strahlung bestimmt, was einen direkten Rückschluss auf die atomare Zusammensetzung des durchleuchteten Materialteilchens gestattet.

Innerhalb der Röntgeneinrichtung wird das Sortiermaterial auf einem Förderband beschleunigt und währenddessen mittels Röntgentransmission analysiert. Am Ende des Förderbandes befindet sich ein Materialabwurf, der in zwei unterschiedliche Abgabestationen einfördert. Befindet sich ein Materialteilchen auf dem Förderband, das durch die Röntgentransmission als ein solches erkannt wird, das innerhalb eines voreingestellten Erkennungsbereichs liegt, so wird es durch einen Pressluftimpuls aus einer dafür vorgesehenen Düseneinrichtung erfasst und in seiner Flugbahn nach Verlassen des Förderbandes so verändert, dass es in der zweiten Ausgabestation landet, wodurch es aussortiert ist. Ein außerhalb des Erkennungsbereichs liegendes Materialteilchen bleibt in seiner Flugbahn dank ausbleibendem Pressluftimpuls unverändert und gelangt in die erste Ausgabestation. Auf diese Weise lassen sich einfach und zuverlässig eine Aluminium-Fraktion einerseits und eine Fraktion aus Störmaterialien andererseits gewinnen.

Die Fraktion aus Störmaterialien kann im Weiteren verpackt und gegebenenfalls einer externen Weiterverarbeitung zugeführt werden.

Das Ziel der analytischen Sortierung nach der erfindungsgemäßen Verfahrensweise ist nicht der Reinheitsgrad des Aluminiums in Prozent. Es ist vielmehr die Zuordnung zu einer definierten Legierung maßgeblich. Insofern kann das erfindungsgemäße Verfahren auch als Legierungssortierung bezeichnet werden. Es sei folgendes Beispiel genannt:

Als Ausgangsmaterial kommen blanke Aluminiumbleche aus der 3000er Legierungsgruppe in die erfindungsgemäße Verfahrensabwicklung, beispielsweise die Aluminiumlegierung EN AW-3003, die über maximal 0,05 - 0,20 % Cu (Kupfer) verfügt.

Dieses Ausgangsmaterial ist analytisch nicht homogen sondern mit Blechschrott der 2000er Legierungsgruppe versetzt, beispielsweise die Aluminiumlegierung EN AW-2024, die einen Kupferanteil von 3,8 - 4,9 % beinhaltet.

Dieses Aluminium-Schrottgemisch ist für Halbzeug-Werke nicht einsetzbar, weshalb nach dem Stand der Technik unter Einsatz erheblicher Kosten thermisch nachlegiert werden müsste. Mit der erfindungsgemäßen Verfahrensdurchführung ist es nunmehr möglich, mechanisch die Aluminium-Legierung der 2000er Legierungsgruppe, das heißt die Aluminiumlegierung mit erhöhtem Kupfergehalt innerhalb des Materialmixes zu detektieren und auszusondern. Im Ergebnis kann so eine sortierte EN-AW 3003 Qualität erzeugt werden, die den Lieferspezifikationen der Halbzeug-Werke entspricht, so dass eine thermische Nachlegierung nicht weiter erforderlich ist.

Gemäß einem weiteren Merkmal der Erfindung ist ein Verfahren vorgesehen, bei dem in einem sechsten Schritt aus der verbleibenden Restfraktion in einem Nicht-Eisen-Abscheider Reststoffe abgeschieden werden. Die die Röntgeneinrichtung verlassende Aluminium-Fraktion wird erfindungsgemäß in einem letzten Verfahrensschritt einem Nicht-Eisen-Abscheider zugeführt. In diesem wird das Material durch ein Förderband beschleunigt und die Nichteisen-Metalle werden von dem Magnetfeld eines Magnettrommel-Polesystems erfasst, wodurch sich die Flugparabel der Nichteisen-Metalle verändert und die Materialien hinter einem Trennscheitel in entsprechenden Abgabestationen landen. Abgeschiedene Reststoffe wie Kunststoffreste, Glas, Pappe, Papier und Holz werden durch ihre unveränderte Flugbahn, das heiß -parabel vor dem Trennscheitel gehalten und gelangen zu einer anderen Abgabestation.

Im Ergebnis des vorerläuterten Verfahrens ergibt sich eine Aluminium-Fraktion, die ausschließlich mechanisch aufbereitet ist, wobei aufgrund des erfindungsgemäß vorgesehenen Verfahrensschrittes der Röntgentransmission eine Röntgensortierung vorgesehen ist, der gemäß unerwünschte Metalle und Aluminium-Legierungen aussortiert werden können, was in vorteilhafter Weise einen hohen Reinheitsgrad hinsichtlich der nach der erfindungsgemäßen Verfahrensdurchführung erhaltenen Aluminium-Fraktion gewährleistet.

Mit der erfindungsgemäßen Verfahrensdurchführung können insbesondere Schwermetalle mit höherer Dichte ausfindig gemacht und aussortiert werden. Zu nennen sind hier beispielsweise Zink, Kupfer, Edelstahl, Blei und/oder dergleichen. Ferner erlaubt die erfindungsgemäße Verfahrensdurchführung eine Sortierung von Aluminium-Legierungen, da diese aufgrund ihres charakteristischen Spektrums ebenfalls voneinander unterschieden werden können, beispielsweise Aluminium-Zink-Legierungen der 7000er Legierungsgruppe, Aluminium-Kupfer-Legierungen der 2000er Legierungsgruppe und/oder dergleichen. Es können mit der erfindungsgemäßen Verfahrensdurchführung ferner unterschiedliche Gusslegierungen ausgeschleust werden und es ist somit möglich, den Siliziumanteil zu reduzieren, da innerhalb der Aluminiumgusslegierungen ca. 90% der Legierungen Zink oder Kupfer als nennenswerte Nebenelemente enthalten sind. Somit lassen sich durch das Ausschleusen von Kupferlegierungen und Zinklegierungen ebenfalls Gusslegierungen erkennen und aussortieren.

Alle abgeschiedenen Fraktionen finden in den jeweiligen Industriezweigen Verwendung oder kehren in den Wirtschaftskreislauf zurück. Shredderleichtfraktionen und Stäube dienen beispielsweise der energetischen Verwertung als Ersatzbrennstoff zur Zementherstellung. Aluminium-Kupfer-Legierungen, Aluminium-Zink-Legierungen sowie Aluminium-Guss-Legierungen und die Aluminium-Siebfraktionen können in Aluminiumsekundärschmelzen eingesetzt werden oder dienen zur Herstellung von Stahl als Zuschlagstoff. Aussortierte Schwermetalle können in weiteren Sortierschritten ebenfalls aufbereitet und in den Materialkreislauf zurückgeführt werden.

Die Nachhaltigkeit des erfindungsgemäßen Verfahrens ergibt sich nicht nur aus Energie- und CO₂-Ersparnis sondern auch durch die Nutzungseffizienz hinsichtlich der aussortierten Materialien.

Mit der Erfindung wird ferner vorgeschlagen eine Vorrichtung zur mechanischen Aufbereitung von Aluminiumschrott, insbesondere eine Vorrichtung zur Durchführung des vorbeschriebenen Verfahrens, mit einer Einrichtung zur Zerkleinerung des Aluminiumschrotts, einer der Zerkleinerungseinrichtung nachgeschalteten Siebanlage, einer Röntgeneinrichtung für die die Siebanlage verlassende Fraktion aus Überkornmaterialien sowie einer mit einer pneumatischen Düseneinrichtung ausgestattete Trenneinrichtung, wobei die Düseneinrichtung in Abhängigkeit einer von der Röntgeneinrichtung mittels Röntgentransmission ermittelte Differenz der Strahlungsintensität steuerbar ist.

Die mit der Erfindung vorgeschlagene Vorrichtung ergibt die schon anhand des erfindungsgemäßen Verfahrens erläuterten Vorteile. Dabei kann optional vorgesehen sein, der Röntgeneinrichtung eine Vergleichmäßigungseinrichtung vorzuschalten, um sicherzustellen, dass ein möglichst homogenes Gemisch an Sortiergut der Röntgeneinrichtung zugeführt wird.

Weitere Merkmale und Vorteile der Erfindung ergeben sich aus der nachfolgenden Beschreibung anhand der Figuren. Dabei zeigen:
- Fig. 1: das erfindungsgemäße Verfahren in schematischer Darstellung und
- Fig. 2: eine Röntgensortierung nach der Erfindung.

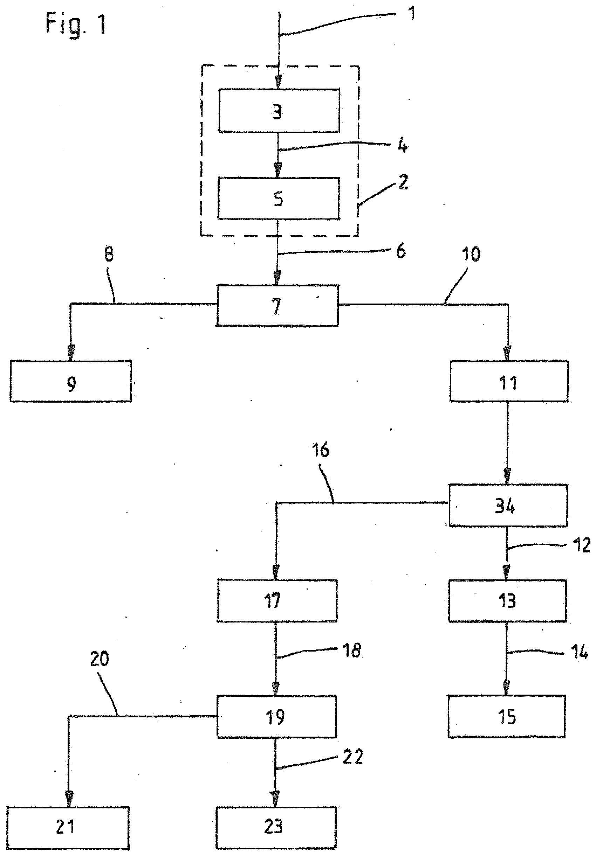

Fig. 1 lässt in einem schematischen Blockdiagramm die erfindungsgemäße Verfahrensdurchführung erkennen.

Aluminiumschrott 1 wird als Ausgangsmaterial einer Zerkleinerungseinrichtung 2 zugeführt. Die Zerkleinerungseinrichtung 2 ist mehrstufig aufgebaut und verfügt über einen Shredder/Rotormühle 3 einerseits und einen Nachzerkleinerer/Schneidmühle 5 andererseits. Dabei wird der Aluminiumschrott 1 zunächst dem Shredder/Rotormühle 3 zugeführt. Das den Shredder/Rotormühle 3 verlassende Material gelangt sodann dem Pfeil 4 folgend in den Nachzerkleinerer/Schneidmühle 5. Hier findet eine Nachzerkleinerung des geshredderten Materials statt, wobei das den Nachzerkleinerer/Schneidmühle 5 gemäß Pfeil 6 verlassende Material in seiner geometrischen Ausgestaltung plättchenartig oder flächenhaft ist.

Das den Nachzerkleinerer/Schneidmühle 5 verlassende Material gelangt zu einer Siebanlage 7. Hier findet eine Aussortierung statt, wobei der Materialstrom in zwei Teilströme gemäß der Pfeile 8 und 10 unterteilt wird.

Die vorbeschriebene Zerkleinerung kann weitere Einzelschritte beinhalten. So zum Beispiel Eisenabscheider, Nichteisen-Metallabscheider, Entstaubungseinrichtungen und/oder dergleichen. Dem Grunde nach sind derartige Aufbereitungsschritte aus dem Stand der Technik bekannt. Schlussendlich hängen die eingesetzten Einzelmaßnahmen von der Zusammensetzung des Ausgangsmaterials ab. Beispiele für typischen Aluminiumschrott sind Aluminium-Profile, Aluminium-Bleche, Aluminium-Dosen und/oder dergleichen.

Ausgangspunkt für das erfindungsgemäße Verfahren ist jedenfalls ein vorgeshreddertes Aluminium-Materialgemisch, wobei die einzelnen Partikel eine Größe von bis zu 200 mm aufweisen. Es kann dann noch eine Handsortierung und eine Nachzerkleinerung mit angeschlossener Entstaubung stattfinden, bevor das Material der Siebanlage 7 zugeführt wird. Entscheidend für den weiteren Prozessablauf ist, dass das der Siebanlage entstammende Material eine definiert Größenordnung aufweist, damit im Anschluss eine zuverlässige Röntgenanalyse stattfinden kann.

Die Siebanlage 7 verlässt einerseits eine Fraktion aus Unterkornmaterial 9 und andererseits eine Fraktion aus Überkornmaterial 11. Je nach Siebanlage 7 ergeben sich die Korngrößen für das Unterkornmaterial 9 einerseits beziehungsweise das Überkornmaterial 11 andererseits. Es ist indes bevorzugt, wenn das Überkornmaterial eine Größe von mehr als 0,3 mm, mehr bevorzugt von mehr als 3 mm, noch mehr bevorzugt von mehr als 10 mm aufweist. Der Anteil der Fraktion aus Unterkornmaterialien 9 liegt bevorzugterweise unter 0,5% gemessen am Gesamtvolumenstrom.

Für die weitere Verfahrensdurchführung findet allein die Fraktion aus Überkornmaterial 11 Verwendung. Dieses wird als Sortiergut einer Röntgeneinrichtung 34 zugeführt, die eine Röntgensortierung mittels Röntgentransmission durchführt. Es werden so unerwünschte Metalle und/oder Aluminium-Legierungen gemäß Pfeile 12 aussortiert, die als Metall-Fraktion 13 in Entsprechung des Pfeils 14 in einen Behälter 15 eingefördert werden.

Die Röntgeneinrichtung 34 verlässt gemäß Pfeil 16 auch eine Aluminium-Fraktion 17. Diese wird in Entsprechung des Pfeils 18 einem Nichtmetall-Abscheider 19 zugeführt. Hier erfolgt eine Unterteilung gemäß der Pfeile 20 und 22 in unerwünschte Reststoffe 21 einerseits und dem Aluminiumprodukt 23, das als Ergebnis der erfindungsgemäßen Verfahrensdurchführung steht.

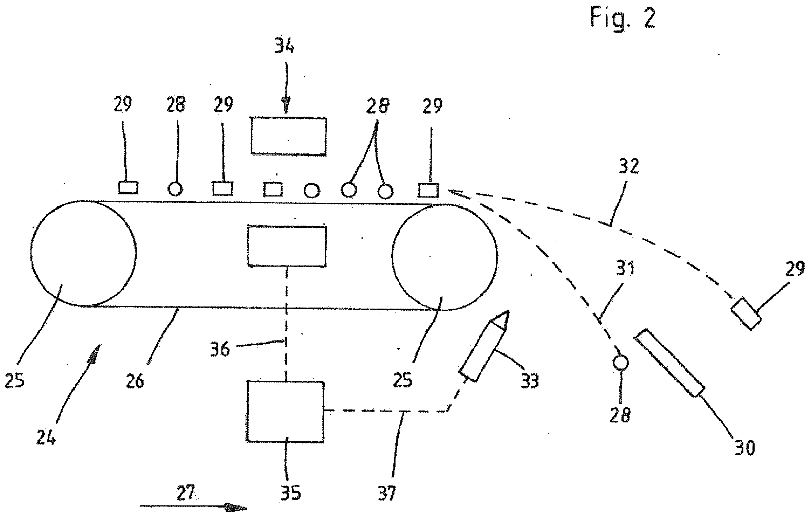

Fig. 2 lässt in einer schematischen Darstellung die nach der erfindungsgemäßen Verfahrensdurchführung vorgesehene Röntgensortierung erkennen.

Diese verfügt über eine Förderanlage 24, die ein um zwei Umlenkrollen 25 geführtes Förderband 26 aufweist, das in Förderrichtung 27 fördert.

Auf das Förderband 26 wird Sortiergut aufgegeben, das Aluminium-Partikel 28 einerseits sowie Störpartikel 29 andererseits beinhaltet. In Transportrichtung 27 schließt sich an die Förderanlage 24 eine Materialabgabe an. Die Materialabgabe beinhaltet zwei Abgabestellen, die durch ein Trennblech 30 voneinander getrennt sind.

Es ist desweiteren eine Röntgeneinrichtung 34 vorgesehen. Diese verfügt über eine Röntgenstrahlungsquelle einerseits und eine für Röntgenstrahlen sensible Kamera andererseits.

Das vom Transportband geförderte Sortiergut wird in der Röntgeneinrichtung 34 von Röntgenstrahlen durchleuchtet. Die für Röntgenstrahlen sensible Kamera ermittelt die Intensität der Strahlung, die durch das Material des Sortiergutes hindurchtritt. Ein mit der Röntgeneinrichtung 34 in kommunikationstechnischer Verbindung 36 stehender Rechner 35 ermittelt den Unterschied zwischen der eintretenden Röntgenstrahlung einerseits und der austretenden Röntgenstrahlung andererseits. Die sich hieraus ergebende Differenz der Strahlungsintensität, das heißt die vom durchleuchteten Sortiergut bewirkte Absorption der Röntgenstrahlung lässt einen direkten Rückschluss auf die atomare Zusammensetzung, das heißt die Dichte des röntgendurchstrahlten Sortierguts zu.

Mit dem Rechner 35 steht ferner eine Düseneinrichtung 33 in kommunikationstechnischer Verbindung 37. Wird durch die Röntgentransmission ein Materialteilchen innerhalb des Sortiergutes erkannt, dass aufgrund seiner ermittelten Dichte innerhalb eines vorgebbaren Bereiches liegt, wird es durch einen Pressluftimpuls aus der Düseneinrichtung 33 in seiner Wurfparabel ausgelenkt, womit die Aussortierung bewirkt ist.

Wie die Darstellung nach Fig. 2 erkennen lässt, bleibt die Wurfparabel 31 von Aluminium-Partikel unverändert, weshalb sie mit Bezug auf die Zeichnungsebene nach Fig. 2 in Förderrichtung 27 des Transportbandes 26 vor dem Trennblech 30 zu liegen kommen. Die Wurfparabel 32 von Störpartikeln ist indes in Folge eines Pressluftimpulses aus der Düseneinrichtung 33 beeinflusst und dahingehend abgelenkt, dass die Störpartikel 29 hinter dem Trennblech 30 zu liegen kommen. Im Ergebnis kann so eine schnelle und in der Durchführung zuverlässige Trennung von Aluminium-Partikeln einerseits und Störpartikeln andererseits vorgenommen werden.

### Bezugszeichenliste

- 1: Aluminiumschrott
- 2: Zerkleinerungseinrichtung
- 3: Shredder/Rotormühle
- 4: Pfeil
- 5: Nachzerkleinerer/Schneidmühle
- 6: Pfeil
- 7: Siebanlage
- 8: Pfeil
- 9: Fraktion Unterkornmaterial
- 10: Pfeil
- 11: Fraktion Überkornmaterial
- 12: Pfeil
- 13: Metall-Fraktion
- 14: Pfeil
- 15: Behälter
- 16: Pfeil
- 17: Aluminium-Fraktion
- 18: Pfeil
- 19: Nichteisen-Abscheider
- 20: Pfeil
- 21: Reststoff
- 22: Pfeil
- 23: Aluminiumprodukt
- 24: Förderanlage
- 25: Umlenkrolle
- 26: Förderband
- 27: Transportrichtung
- 28: Aluminium-Partikel
- 29: Störpartikel
- 30: Trennblech
- 31: Wurfparabel Aluminium-Partikel
- 32: Wurfparabel Störpartikel
- 33: Düseneinrichtung
- 34: Röntgeneinrichtung
- 35: Rechner
- 36: Kommunikationstechnische Verbindung
- 37: Kommunikationstechnische Verbindung

## Patentansprüche

1. Verfahren zur mechanischen Aufbereitung von Aluminiumschrott (1), bei dem in einem ersten Schritt eine Zerkleinerung des Aluminiumschrotts (1) durchgeführt wird, bei dem in einem zweiten Schritt der zerkleinerte Aluminiumschrott (1) einer Siebanlage (7) zugeführt und in eine Fraktion aus Unterkornmaterialien (9) einerseits und eine Fraktion aus Überkornmaterialien (11) andererseits unterteilt wird, bei dem in einem dritten Schritt die Fraktion aus Überkornmaterialien (11) vergleichmäßigt wird, bei dem in einem vierten Schritt die vergleichmäßigte Fraktion aus Überkornmaterialien (11) als Sortiergut in einer Röntgeneinrichtung (34) einer Dichtebestimmung mittels Röntgentransmission unterzogen wird, bei dem in einem fünften Schritt Materialpartikel aus dem Sortiergut mit einer oberhalb eines vorgebbaren Grenzwertes liegenden Dichte pneumatisch aussortiert werden.

2. Verfahren nach Anspruch 1, **dadurch gekennzeichnet, dass** in einem sechsten Schritt aus der verbleibenden Restfraktion in einem Nicht-Eisen-Abscheider (19) Reststoffe (21) abgeschieden werden.

3. Verfahren nach Anspruch 1 oder 2, **dadurch gekennzeichnet, dass** der Verfahrensschritt der Zerkleinerung mehrstufig durchgeführt wird, wobei in einer letzten Zerkleinerungsstufe scheibenförmige Materialpartikel ausgebildet werden.

4. Verfahren nach Anspruch 3, **dadurch gekennzeichnet, dass** die scheibenförmigen Materialpartikel mit einer in einem vorgebbaren Bereich liegenden Wandungsstärke ausgebildet werden.

5. Verfahren nach Anspruch 1, 2, 3 oder 4, **dadurch gekennzeichnet, dass** das Überkornmaterial eine Partikelgröße von > 0,3 mm, mehr bevorzugt von > 3 mm und noch mehr bevorzugt von > 10 mm aufweist.

6. Verfahren nach einem der vorhergehenden Ansprüche, **dadurch gekennzeichnet, dass** in der Röntgeneinrichtung (34) eine Durchleuchtung des Sortierguts mit Röntgenstrahlen stattfindet, wobei die Intensität der Austrittsstrahlung mittels eines Sensor erfasst wird.

7. Verfahren nach Anspruch 6, **dadurch gekennzeichnet, dass** ein Intensitätsvergleich zwischen eintretender und austretender Röntgenstrahlung durchgeführt und die Differenz der Strahlungsintensität ermittelt wird.

8. Verfahren nach Anspruch 7, **dadurch gekennzeichnet, dass** in Abhängigkeit der ermittelten Differenz der Strahlungsintensität eine pneumatische Düseneinrichtung (33) angesteuert wird.

9. Vorrichtung zur mechanischen Aufbereitung von Aluminiumschrott (1), mit einer Einrichtung (2) zur Zerkleinerung des Aluminiumschrotts (1), einer der Zerkleinerungseinrichtung (2) nachgeschalteten Siebanlage (8), einer Röntgeneinrichtung (34) für die die Siebanlage (8) verlassende Fraktion aus Überkornmaterial sowie einer mit einer pneumatischen Düseneinrichtung (33) ausgestatteten Trenneinrichtung, wobei die Düseneinrichtung (33) in Abhängigkeit einer von der Röntgeneinrichtung (34) mittels Röntgentransmission ermittelten Differenz der Strahlungsintensität steuerbar ist, wobei der Röntgeneinrichtung (34) eine Vergleichmäßigungseinrichtung vorgeschaltet ist.

## Claims

1. A method for the mechanical processing of aluminum scrap (1), in which in a first step the aluminum scrap (1) is crushed, in which in a second step the crushed aluminum scrap (1) is supplied to a screening plant (7) and divided into a fraction of undersize grain materials (9), on the one hand, and a fraction of oversize grain materials (11), on the other hand, in which in a third step the fraction of oversize grain materials (11) is homogenized, in which in a fourth step the homogenized fraction of oversize grain materials (11) is subjected as material to be sorted to a density determination in an x-ray device (34) by means of x-ray transmission, in which in a fifth step material particles of the material to be sorted which have a density above a pre-determinable limiting value are pneumatically sorted out.

2. A method according to claim 1, **characterized in that** in a sixth step residual materials (21) are separated from the remaining fraction in a non-iron separator (19).

3. A method according to claim 1 or 2, **characterized in that** the process step of crushing is carried out in several steps, wherein in a last crushing step disk-shaped material particles are formed.

4. A method according to claim 3, **characterized in that** the disk-shaped material particles are formed with a wall thickness that is comprised within a predeterminable range.

5. A method according to claim 1, 2, 3 or 4, **characterized in that** the oversize grain material comprises a particle size of > 0.3 mm, more preferably of > 3 mm and most preferably of > 10 mm.

6. A method according to one of the preceding claims, **characterized in that** the material to be sorted will be x-rayed in an x-ray device (34) by means of x-rays, wherein the intensity of the outgoing radiation will be detected by means of a sensor.

7. A method according to claim 6, **characterized in that** a comparison of the intensity between the entering and the outgoing X-rays will be carried out and the difference of the radiation intensity will be determined.

8. A method according to claim 7, **characterized in that** a pneumatic nozzle device (33) will be triggered in dependence on the determined difference of the radiation intensity.

9. A device for the mechanical processing of aluminum scrap (1), comprising a device (2) for crushing the aluminum scrap (1), a screening plant (8) installed downstream of the crushing device (2), an x-ray device (34) for the fraction of oversize grain material which leaves the screening plant (8) as well as a separation device provided with a pneumatic nozzle device (33), wherein the nozzle device (33) can be controlled in dependence on the difference of the radiation intensity determined by the x-ray device (34) by means of x-ray transmission, wherein a homogenizing device is installed upstream of the x-ray device (34).

## Revendications

1. Procédé destiné à la préparation mécanique de débris d'aluminium (1), dans lequel dans une première étape les débris d'aluminium (1) sont broyés, dans lequel dans une deuxième étape les débris d'aluminium (1) broyés sont amenés à une installation de criblage (7) et divisés en une fraction de grains aux dimensions inférieures (9) d'une part et une fraction de grains aux dimensions supérieures (11) d'autre part, dans lequel dans une troisième étape la fraction de grains aux dimensions supérieures (11) est homogénéisée, dans lequel dans une quatrième étape la fraction de grains aux dimensions supérieures (11) est soumise come matière à trier à une détermination de la densité dans un dispositif de radioscopie (34) par moyen d'une transmission de rayons X, dans lequel dans une quinzième étape des particules de matière dans la matière à trier lesquelles ont une densité au-dessus d'une valeur limite pré-déterminable sont triées de manière pneumatique.

2. Procédé selon la revendication 1, dans lequel dans une sixième étape des matières restantes (21) sont séparées de la fraction résiduelle dans un séparateur de produits non-ferreux (19).

3. Procédé selon la revendication 1 ou la revendication 2, **caractérisé en ce que** l'étape de procédé de broyage est réalisée en plusieurs étapes, des particules de matière sous forme de disques étant formées dans la dernière étape de broyage.

4. Procédé selon la revendication 3, **caractérisé en ce que** les particules de matière sous forme de disques sont formées avec une épaisseur de paroi comprise dans une gamme pré-déterminable.

5. Procédé selon les revendications 1, 2, 3 ou 4, **caractérisé en ce que** les grains aux dimensions supérieures comprennent une taille de particule de > 0,3 mm, de préférence de > 3 mm et de préférence particulière de > 10 mm.

6. Procédé selon l'une des revendications précédentes, **caractérisé en ce que** la matière à trier est examinée par moyen des rayons X dans un dispositif de radioscopie (34), l'intensité de la radiation sortant étant détectée à l'aide d'un capteur.

7. Procédé selon la revendication 6, **caractérisé en ce qu'**une comparaison d'intensités est effectuée entre les rayons X entrant et les rayons X sortant et la différence entre les intensités de rayonnement est déterminée.

8. Procédé selon la revendication 7, **caractérisé en ce qu'**un dispositif de tuyères pneumatique (33) est commandé en fonction de la différence déterminée entre les intensités de rayonnement.

9. Dispositif destiné à la préparation mécanique de débris d'aluminium (1), comprenant un dispositif de broyage (2) des débris d'aluminium (1), une installation de criblage (8) montée en aval du dispositif de broyage (2), un dispositif de radioscopie (34) destiné à examiner la fraction de grains aux dimensions supérieures sortant de l'installation de criblage (8) ainsi qu'un dispositif de séparation muni d'un dispositif de tuyères pneumatique (33), le dispositif de tuyères (33) étant susceptible d'être commandé en fonction d'une différence des intensités de rayonnement déterminée par le dispositif de radioscopie (34) par moyen de transmission de rayons X, un dispositif de homogénéisation étant monté en amont du dispositif de radioscopie (34).
